# EUROPEAN PATENT APPLICATION

(11) **EP 4 439 068 A1**
(43) Date of publication of application: **02.10.2024**
(21) Application number: 22898345.8
(22) Date of filing: 28.10.2022
(51) Int. Cl.: G01N 35/00

(54) **AUTOMATIC ANALYSIS DEVICE**

(30) Priority: 24.11.2021 JP 2021190047
(71) Applicant: HITACHI HIGH-TECH CORPORATION, Tokyo 105-6409 (JP)
(72) Inventor: OHTA Shingo, Tokyo 105-6409 (JP); YAMASHITA Taichiro, Tokyo 105-6409 (JP); ITO Takumi, Tokyo 105-6409 (JP); MATSUOKA Shinya, Tokyo 105-6409 (JP); ITO Mayuko, Tokyo 105-6409 (JP); SAKAIRI Susumu, Tokyo 105-6409 (JP)
(74) Representative: Strehl Schübel-Hopf & Partner
(86) International application number: PCT/JP2022/040522
(87) International publication number: WO 2023/095560

(57) **Abstract**

Provided is an automatic analyzer capable of reducing bumping of a liquid sample. The automatic analyzer includes a reaction container, a heating member, an exhaust unit, and a reaction container moving member. The automatic analyzer executes a first evaporative concentration step in which the exhaust unit aspirates vapor in the reaction container and the heating member heats the reaction container with a first heat quantity in a state where the reaction container is at a separation position, and a second evaporative concentration step in which the exhaust unit aspirates vapor in the reaction container and the heating member heats the reaction container with a second heat quantity larger than the first heat quantity in a state where the reaction container is at a contact position.

## Description

### Technical Field

The present invention relates to an automatic analyzer.

### Background Art

As a method for analyzing a specific component contained in a liquid sample, for example, there is a method using LC-MS in which a liquid chromatograph (LC) and a mass spectrometry (MS) are connected online.

The use of LC-MS is also expanding to the field of clinical tests in which biological samples such as blood and urine are analyzed by an automatic analyzer.

When analyzing a liquid biological sample (hereinafter, may be simply referred to as a sample) such as blood or urine by LC-MS, it is necessary to perform preprocessing for increasing a purification degree of the sample. Examples of preprocessing for a sample include methods such as solid phase extraction (SPE) and liquid-liquid extraction (LLE).

In particular, since the SPE can be easily connected online with the LC-MS, preprocessing by the SPE and an analysis by the LC-MS can be integrally automated.

In preprocessing for a sample, in order to achieve high-sensitivity detection by the LC-MS, evaporative concentration may be performed to increase a concentration of a component to be analyzed by evaporating an extract obtained by extracting the component to be analyzed contained in the sample.

As a technique for evaporatively concentrating a sample in this manner, for example, PTL 1 discloses a device including a heating unit that heats a container to evaporate a sample and an exhaust unit that aspirates generated vapor.

In preprocessing device of such an automatic analyzer, since high throughput is required, it is assumed that evaporation processing is performed within a limited time.

### Citation List

### Patent Literature

PTL 1: WO2021/002431

### Summary of Invention

### Technical Problem

However, the technique in the related art has a problem that bumping of a liquid sample is likely to occur.

For example, in evaporation processing, it may be difficult to appropriately control a heating quantity during exhaust. In such a case, a temperature may rapidly rise while a boiling point of a solution is lowered, and bumping of a liquid sample is likely to occur. When bumping occurs, the liquid sample is aspirated into the exhaust unit, and a concentration of the component to be analyzed may not be sufficiently increased.

The invention has been made in view of the above circumstances, and an object of the invention is to provide an automatic analyzer capable of reducing bumping of a liquid sample.

### Solution to Problem

An example of an automatic analyzer according to the invention includes a reaction container, a heating member, an exhaust unit, and a reaction container moving member, and executes a first evaporative concentration step and a second evaporative concentration step.

The present specification includes disclosure contents of Japanese patent application No. 2021-190047 which are the basis of the priority of the present application.

### Advantageous Effects of Invention

The automatic analyzer according to the invention can reduce bumping of a liquid sample. Other problems, configurations, and effects will be clarified by the following description of embodiments.

### Brief Description of Drawings

[FIG. 1] FIG. 1 is a diagram schematically showing an overall configuration of an automatic analyzer according to Embodiment 1 of the invention.
[FIG. 2] FIG. 2 is a diagram showing an example of a preprocessing step of analysis processing by the automatic analyzer.
[FIG. 3] FIG. 3 is a view schematically showing an example of an evaporative concentration mechanism according to Embodiment 1 of the invention.
[FIG. 4] FIG. 4 is a schematic view of the evaporative concentration mechanism shown in FIG. 3 as viewed from right to left.
[FIG. 5] FIG. 5 is a schematic view of the evaporative concentration mechanism shown in FIG. 3 as viewed from rear to front.
[FIG. 6] FIG. 6 is a schematic view showing a cross section of the evaporative concentration mechanism shown in FIG. 3 through which centers of a reaction container and an exhaust unit pass, when viewed from a front direction.
[FIG. 7] FIG. 7 is a view schematically showing a pivoting operation of the exhaust unit in the evaporative concentration mechanism shown in FIG. 3.
[FIG. 8] FIG. 8 is a graph showing an operation position of each unit of the automatic analyzer with respect to a rotation angle of a pivot cam.
[FIG. 9] FIG. 9 is a view schematically showing a positional relationship between the reaction container and the exhaust unit when the pivot cam is operated.
[FIG. 10] FIG. 10 is a diagram showing a configuration example of the pivot cam.
[FIG. 11] FIG. 11 is a view schematically showing examples of a positional relationship among components inside an exhaust unit driving mechanism when the pivot cam is operated.
[FIG. 12] FIG. 12 is another view schematically showing examples of the positional relationship among the components inside the exhaust unit driving mechanism when the pivot cam is operated.
[FIG. 13] FIG. 13 is a cross-sectional view of the evaporative concentration mechanism as viewed from above along a horizontal plane passing through a central axis of the pivot cam.

### Description of Embodiments

Hereinafter, embodiments of the invention will be described with reference to the drawings. Although an automatic analyzer that combines a sample preprocessing function with liquid chromatograph-mass spectrometer (LC-MS) as an analysis mechanism is described as an example in the embodiment, the invention can also be applied to, for example, an automatic analyzer that combines a separation unit such as a capillary electrophoresis and a detector such as an absorption photometer as an analysis mechanism.

### [Embodiment 1]

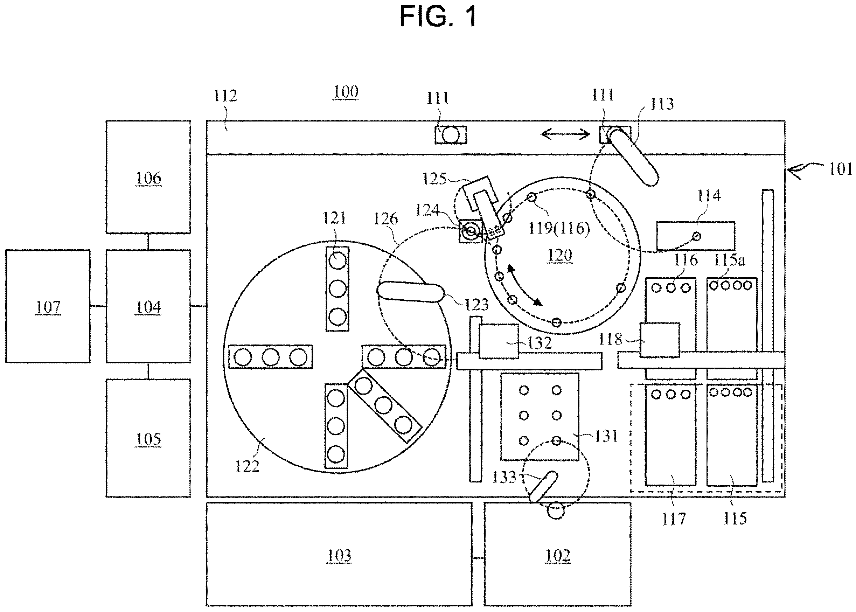

FIG. 1 is a diagram schematically showing an overall configuration of an automatic analyzer according to Embodiment 1 of the invention.

The automatic analyzer according to the present embodiment aims to reduce bumping of a liquid sample.

In FIG. 1, an automatic analyzer 100 includes a preprocessing unit 101 that executes preprocessing of a sample, a separation unit 102 that separates components in the sample, an analysis unit 103 that analyzes a separated component, a control unit 104 that controls overall operations of the analyzer, an input unit 105 for a user to input information to the analyzer, a display unit 106 that displays information to the user, and a storage unit 107 such as a storage medium that stores various kinds of information related to control of the automatic analyzer 100.

The control unit 104, the input unit 105, the display unit 106, and the storage unit 107 constitute a control device that controls overall operations of the automatic analyzer 100.

Although the input unit 105 and the display unit 106 are separately provided in Embodiment 1, for example, the input unit 105 and the display unit 106 may be integrated as a touch panel monitor.

The preprocessing unit 101 includes a transport mechanism 112 that transports a sample container 111 containing a sample to be analyzed to a sample dispensing position, a reaction container disk 120 that can hold a solution in a reaction container 116 at a constant temperature by mounting the reaction containers 116 in a plurality of openings 119, a reagent disk 122 that holds a plurality of reagent containers 121 containing reagents, and a sample dispensing mechanism 113 that dispenses the sample from the sample container 111 transported to the sample dispensing position to the reaction containers 116 accommodated in the openings 119 of the reaction container disk 120.

The reaction container 116 can contain a liquid sample, has an opening in an upper surface, and is formed in a bottomed shape.

The preprocessing unit 101 includes a reagent dispensing mechanism 123 that dispenses the reagent from the reagent container 121 to the reaction container 116 of the reaction container disk 120, a dispensing tip mounting rack 115 mounted with an unused disposable dispensing tip 115a attached to a nozzle of the sample dispensing mechanism 113, and a dispensing tip attaching and detaching unit 114 that detaches and discards the used dispensing tip 115a from the nozzle of the sample dispensing mechanism 113 or attaches the unused dispensing tip 115a to the nozzle.

The preprocessing unit 101 further includes a reaction container mounting rack 117 mounted with the unused reaction container 116, and a transport mechanism 118 that transports the unused dispensing tip 115a from the dispensing tip mounting rack 115 to the dispensing tip attaching and detaching unit 114, transports the used reaction container 116 from the opening 119 of the reaction container disk 120 to a discarding unit (not shown), and transports the unused reaction container 116 from the reaction container mounting rack 117 to the opening 119 of the reaction container disk 120.

The preprocessing unit 101 further includes a magnetic separation mechanism 124 that separates magnetic beads in the solution contained in the reaction container 116 by a magnetic force of a magnet, a transport mechanism 125 that transports the reaction container 116 between the reaction container disk 120 and the magnetic separation mechanism 124, and an evaporative concentration mechanism 131 that evaporatively concentrates a component to be analyzed in the solution contained in the reaction container 116.

The preprocessing unit 101 further includes a transport mechanism 132 that transports the reaction container 116 between the reaction container disk 120 and the evaporative concentration mechanism 131, a separation unit dispensing mechanism 133 that dispenses the evaporatively concentrated solution in the reaction container 116 to the separation unit 102 that separates components in the sample, and an analysis unit 103 that detects and analyzes components in the solution separated by the separation unit 102.

The magnetic separation mechanism 124 is provided on a rotation trajectory 126 of the reagent dispensing mechanism 123. The reagent dispensing mechanism 123 can discharge a reagent into the reaction container 116 supported by the magnetic separation mechanism 124 and aspirate the solution in the reaction container 116.

The reaction container disk 120 functions as an incubator that keeps a temperature of the reaction container 116 provided in the opening 119 constant, and the reaction container 116 provided in the opening 119 is incubated for a certain time.

The separation unit 102 is, for example, a liquid chromatograph (LC), and includes a column or the like as a functional unit that separates components in a reaction solution dispensed by the separation unit dispensing mechanism 133. The separation unit 102 separates components in the reaction solution dispensed from the reaction container 116 by the separation unit dispensing mechanism 133, and sequentially introduces the separated components into the analysis unit 103.

The analysis unit 103 is, for example, a mass spectrometer (MS), and includes an electron multiplier tube or the like as a function of performing ionization and mass spectrometry on the components introduced from the separation unit 102. The analysis unit 103 ionizes the components introduced from the separation unit 102 to detect an ion amount (that is, a component amount), and outputs a detection result to the control unit 104.

The control unit 104 controls an operation of the evaporative concentration mechanism 131, an operation of the separation unit 102, and an operation of the analysis unit 103. The control unit 104 calculates a concentration value of a component in the sample using the detection result (the ion amount) from the analysis unit 103 and a calibration curve obtained in advance, stores the concentration value as an analysis result in the storage unit 107, and displays the analysis result on the display unit 106.

As a method for obtaining the calibration curve, for example, first, a standard substance having a known concentration is analyzed for a plurality of concentrations. Then, relative to m/z (a mass/charge ratio) of ions derived from the standard substance, an ion amount, that is, a temporal change (a mass chromatogram) of an ion intensity is acquired, and a peak area of the mass chromatogram is obtained. The calibration curve is created based on a relationship between the area and a concentration of the standard substance.

It is possible to detect a component concentration of a sample having an unknown concentration and having the same component to be analyzed as the standard substance by using the calibration curve obtained in such a manner.

Specifically, the peak area of the mass chromatogram is obtained for a sample to be analyzed, and a component concentration of a component to be analyzed is determined based on a correspondence between the peak area of the mass chromatogram and the calibration curve.

When an intensity of detected ions is normalized based on an intensity of ions derived from an internal standard substance, data can be compared with high accuracy. That is, it is possible to compare and verify ion intensities among analysis, the ion intensities may show a slight variation from analysis to analysis due to an influence of preprocessing of a sample, injection of a sample into the LC-MS, ionization in the LC-MS, or the like. This method is called an internal standard method.

Here, first, basic steps of analysis processing will be described.

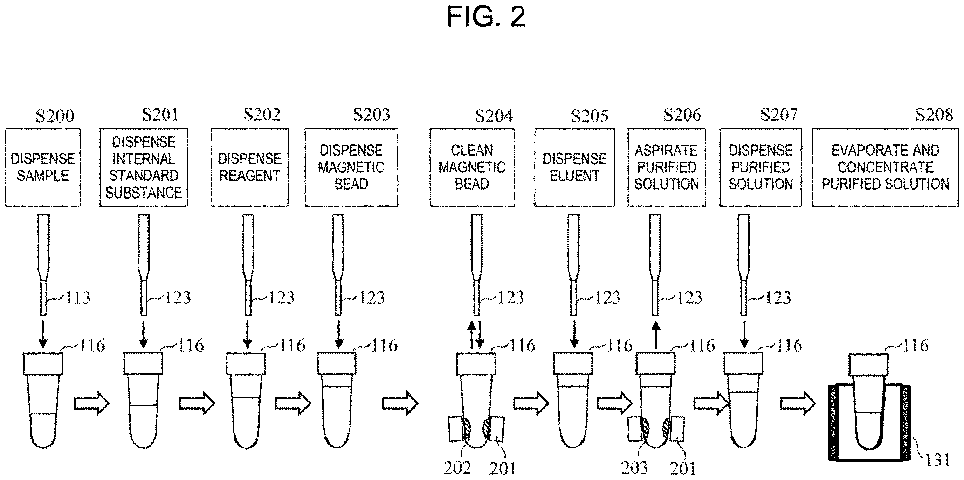

FIG. 2 is a diagram showing an example of a preprocessing step of the analysis processing executed by the automatic analyzer.

Before starting preprocessing, the unused reaction container 116 is set in the opening 119 on the reaction container disk 120 from the reaction container mounting rack 117 by the transport mechanism 118. Prior to dispensing a sample, the sample dispensing mechanism 113 accesses the dispensing tip attaching and detaching unit 114 to attach the dispensing tip 115a to a tip end of a nozzle.

In preprocessing, first, the sample dispensing mechanism 113 aspirates a sample containing a component to be analyzed from the sample container 111 via the dispensing tip 115a, and discharges the sample to the reaction container 116 of the reaction container disk 120 (step S200).

When dispensing of a sample from one sample container 111 is completed by the sample dispensing mechanism 113, the dispensing tip attaching and detaching unit 114 discards the used dispensing tip 115a and mounts the unused dispensing tip 115a.

Subsequently, the reagent dispensing mechanism 123 aspirates the internal standard substance as a reagent corresponding to a component to be analyzed from the reagent container 121 of the reagent disk 122, and discharges the internal standard substance to the reaction container 116 (step S201).

Subsequently, the reagent dispensing mechanism 123 aspirates, for example, a reagent as a deproteinization agent from the reagent container 121 of the reagent disk 122 and discharges the reagent to the reaction container 116 (step S202).

Subsequently, the reagent dispensing mechanism 123 aspirates a suspension of magnetic beads as a reagent from the reagent container 121 of the reagent disk 122, and discharges the suspension to the reaction container 116 (step S203).

Subsequently, the reaction container 116 into which the sample, the internal standard substance, and the magnetic beads are dispensed is transported to the magnetic separation mechanism 124 by the transport mechanism 125, and the magnetic beads are cleaned (step S204). In the magnetic separation mechanism 124, the magnetic beads holding the component to be analyzed and the internal standard substance are collected (shown as magnetic bead groups 202 in FIG. 2) on an inner wall surface of the reaction container 116 by magnetic forces of magnets 201 disposed at a position along an outer side surface of the reaction container 116. In this state, a solution in the reaction container 116 is aspirated and discarded by the reagent dispensing mechanism 123.

At this time, the magnetic beads, and the component to be analyzed and the internal standard substance that are held by the magnetic beads remain in the reaction container 116.

Subsequently, the reagent dispensing mechanism 123 aspirates, from the reagent container 121 of the reagent disk 122, a cleaning liquid for cleaning impurities other than substances (the component to be analyzed and the internal standard substance) held by the magnetic beads, and discharges the cleaning liquid to the reaction container 116.

At this time, a restriction on the magnetic beads caused by the magnetic forces of the magnets 201 may be temporarily released.

Subsequently, in a state where the magnetic beads are again collected on the inner wall surface of the reaction container 116 by the magnets 201, the reagent dispensing mechanism 123 aspirates and discards a solution (the cleaning liquid) of the reaction container 116, thereby washing the magnetic beads.

Subsequently, the reagent dispensing mechanism 123 aspirates, from the reagent container 121 of the reagent disk 122, an eluate for eluting the component to be analyzed and the internal standard substance from the magnetic bead groups 202 as a reagent, and discharges the eluate to the reaction container 116 (step S205).

Subsequently, in a state where magnetic bead groups 203 from which the component to be analyzed and the internal standard substance are eluted are collected on the inner wall surface of the reaction container 116 by the magnetic forces of the magnets 201, the reagent dispensing mechanism 123 aspirates a solution (a purified solution) of the reaction container 116 (step S206), and discharges the solution to the unused reaction container 116 of the reaction container disk 120 different from the reaction container 116 disposed in the magnetic separation mechanism 124 (step S207).

The purified solution contained in the reaction container 116 of the reaction container disk 120 is incubated as needed.

Subsequently, the reaction container 116 containing the purified solution is transported to the evaporative concentration mechanism 131 by the transport mechanism 132, and components in the purified solution are evaporated and concentrated (step S208). A detailed configuration of the evaporative concentration mechanism 131 will be described later.

Subsequently, when a composition of the purified solution is changed such that the component to be analyzed is bound to a separation column (not shown) provided in the separation unit 102, the reagent dispensing mechanism 123 aspirates a diluted solution from the reagent container 121 of the reagent disk 122 and discharges the diluted solution to the reaction container 116.

The separation unit dispensing mechanism 133 aspirates the purified solution obtained by the above preprocessing step from the reaction container 116 and discharges the purified solution to the separation unit 102, and the analysis unit 103 ionizes components separated by the separation unit 102 to detect an ion amount (that is, a component amount). A detection result of the analysis unit 103 is output to the control unit 104, and a concentration value of a component in the sample is calculated using the calibration curve.

Next, evaporative concentration processing according to Embodiment 1 will be described. The automatic analyzer according to Embodiment 1 has an evaporative concentration mechanism and a control method capable of selecting whether to perform evaporative concentration for each component to be analyzed, that is, each sample. For example, an identification number is assigned to each sample, an identification number of a sample to be subjected to the evaporative concentration processing is stored in the storage unit 107 via the input unit 105, the control unit 104 selects whether to perform evaporative concentration for each sample and executes processing for a sample based on stored contents. That is, the control unit 104 determines whether to perform the evaporative concentration processing on a component to be analyzed in a sample, and causes the evaporative concentration mechanism 131 to concentrate the component to be analyzed in the sample for the sample determined to be subjected to the evaporative concentration processing.

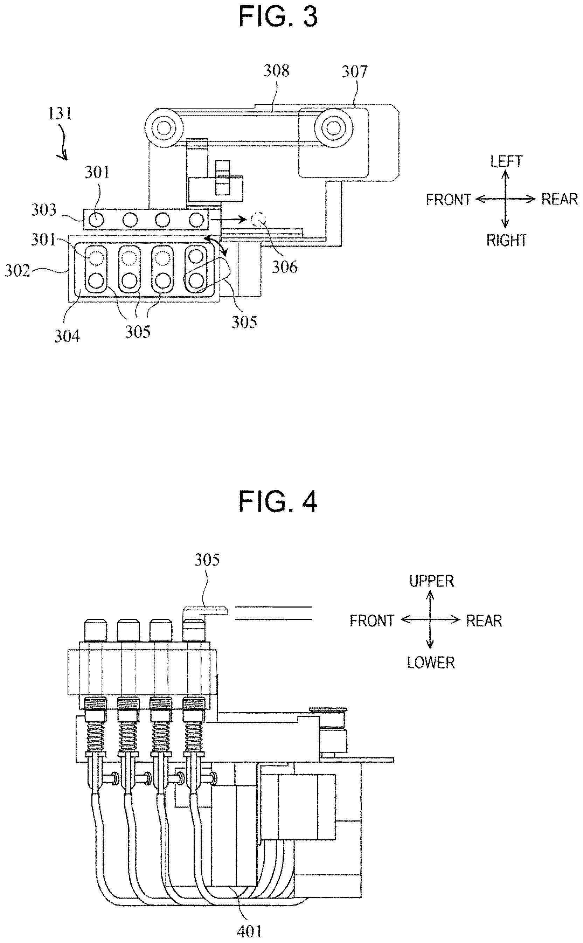

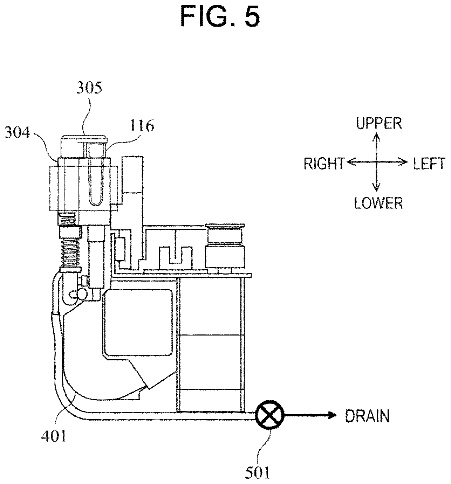

FIGS. 3, 4, and 5 are diagrams schematically showing examples of the evaporative concentration mechanism 131 according to the invention.

In FIG. 3, the evaporative concentration mechanism 131 includes a heating unit 304 (a heating member) that heats the reaction container 116 and an exhaust unit 305 (an exhaust unit) that aspirates vapor in the reaction container 116. The heating unit 304 includes one or more bottomed container receiving portions 301 (insertion holes), and the reaction containers 116 can be inserted into the container receiving portions 301. The "bottomed" refers to a closed end of a hole and refers a lower end of the container receiving portion 301 in the present embodiment, and the lower end does not necessarily need to be formed vertically downward depending on a shape of the container receiving portion.

In particular, the heating unit 304 includes a plurality of container receiving portions 301, and the container receiving portions 301 are arranged in a row in the present embodiment.

The plurality of reaction containers 116 to be transported are individually distributed to the container receiving portions 301 of an evaporative concentration unit 302 that performs evaporative concentration or the container receiving portions 301 of a standby unit 303 that does not perform evaporative concentration. Each of the container receiving portions 301 of the evaporative concentration unit 302 is provided with the corresponding exhaust unit 305.

Here, the evaporative concentration mechanism 131 includes the heating unit 304 that heats the reaction container 116 and the exhaust unit 305 that aspirates vapor in the reaction container 116. Examples of the heating unit 304 include a Peltier device and a heater whose temperature can be controlled by an analysis device.

An example of the exhaust unit 305 include a vacuum pump or the like whose operation can be controlled by an analysis device. A valve 501 may be provided between an opening and a drain of the exhaust unit 305.

An example of a method of distributing the reaction container 116 to either the container receiving portion 301 of the standby unit 303 or the container receiving portion 301 of the evaporative concentration unit 302 include a method of moving the evaporative concentration mechanism 131.

First, the control unit 104 moves the evaporative concentration mechanism 131 such that an access point 306 of the transport mechanism 132 and the container receiving portion 301 coincide with each other. At this time, as shown in FIG. 3, the evaporative concentration mechanism 131 may be moved in an arrangement direction of the container receiving portions 301. This is because the container receiving portions 301 can be disposed at the same access point 306. This eliminates the need to drive the evaporative concentration mechanism 131 in a left-right direction, thereby reducing a size of the entire mechanism. In the present example, a motor 307 is used as a driving source for the movement in the arrangement direction, and the movement is converted into a linear movement via a belt mechanism 308. A solenoid, a ball screw, a gear, or the like may be combined to perform linear driving.

The access point 306 is provided at a position corresponding to the standby unit 303 in the example shown in FIG. 3. Alternatively, the access point 306 may be provided at a position corresponding to the heating unit 304, and the heating unit 304 may be movable in parallel to an arrangement direction of the container receiving portions 301. In this manner, the same effect can be attained for the reaction container 116 in which evaporative concentration is performed.

For the sample determined not to be evaporated and concentrated by the control unit 104, the reaction container 116 is transported to the container receiving portion 301 on the standby unit 303 by the transport mechanism 132, and after waiting for a certain period of time, the purified solution is introduced into the separation unit 102 by the separation unit dispensing mechanism 133.

When the evaporative concentration is performed, the reaction container 116 is transported to the container receiving portion 301 in the evaporative concentration unit 302 by the transport mechanism 132. At this time, the exhaust unit 305 is disposed in the vicinity of the heating unit 304 of the evaporative concentration unit 302 at a position separated from the heating unit 304 by a certain distance or more.

In the present embodiment, the exhaust unit 305 is pivoted by an exhaust unit driving mechanism 401 as shown in FIGS. 3 and 4, so that the exhaust unit 305 can be disposed at a position where an up-down projection region of the container receiving portion 301 and an up-down projection region of the exhaust unit 305 do not overlap with each other.

In the present embodiment, the automatic analyzer 100 includes a plurality of exhaust units 305. The exhaust units 305 are arranged corresponding to the container receiving portions 301. For example, the exhaust units 305 are arranged parallel to the container receiving portions 301. Accordingly, the exhaust unit 305 that needs to be driven may be disposed at a certain position separated from the access point 306 by a certain distance, and it is not necessary to increase a movable range of the exhaust unit 305. In this case, the exhaust unit driving mechanism 401 may not be moved in parallel. As shown in FIGS. 3 and 4, the exhaust unit driving mechanism 401 is disposed below the exhaust unit 305 such that the exhaust unit driving mechanism 401 coincides with at least a part of an up-down projection region of a movement range of the evaporative concentration unit 302, so that an up-down proj ection region of the mechanism can be reduced. The "movement range of the evaporative concentration unit 302" refers to, for example, a space occupied when the evaporative concentration unit 302 moves.

Next, the exhaust unit 305 is moved to a position above the reaction container 116 disposed in the heating unit 304 and in close contact with the reaction container 116. In this case, the evaporative concentration mechanism 131 may be moved.

In the present specification, "in close contact" refers to that two structures are in contact with each other with a finite area. The two structures which are in close contact with each other in the present embodiment may be in contact with each other only at one or more points without being in close contact with each other in a modification.

Evaporative concentration is performed by performing exhaust for a certain period of time in a state where the reaction container 116 is heated by the heating unit 304 and the valve 501 is opened.

In order to increase evaporation efficiency, it is better to bring an opening of the reaction container 116 into close contact with the exhaust unit 305 by raising the evaporative concentration unit 302 relative to the exhaust unit 305 or lowering the exhaust unit 305 relative to the reaction container 116.

In this manner, the exhaust unit driving mechanism 401 moves the exhaust unit 305 to a predetermined open position (a raised position in the present embodiment) and a predetermined closed position (a lowered position in the present embodiment). In the present embodiment, the open position and the closed position are both vertically above the reaction container 116.

The open position and the closed position can be expressed as positions of the exhaust unit 305 relative to the reaction container 116. For example, when the exhaust unit 305 is moved up and down integrally with the reaction container 116 in a state where the reaction container 116 is closed, it can be said that the exhaust unit 305 is constantly in the closed position regardless of an absolute position variation of the exhaust unit 305.

The exhaust unit 305 opens the opening of the reaction container 116 by being moved away from the opening at the open position, and seals the opening of the reaction container 116 at the closed position, thereby depressurizing the reaction container 116. In particular, the exhaust unit 305 is openable and closable relative to the opening of the reaction container 116, and seals the opening of the reaction container 116 in a closed state. With such a configuration, opening and depressurization of the reaction container 116 can be appropriately controlled.

However, when the exhaust unit 305 starts to aspirate (depressurize) an inside of the reaction container 116 in a state where the reaction container 116 and the evaporative concentration unit 302 are in close contact with each other, a rapid temperature rise and a boiling point drop of a solution may occur at the same time, and bumping may occur in a sample inside the reaction container 116. As a countermeasure, there is a method in which the inside of the reaction container 116 is sufficiently depressurized in a state where a heat quantity input to the reaction container 116 from the heating unit 304 is reduced, and after a certain time, a heat quantity input to the reaction container 116 is increased.

For example, the heat quantity input to the reaction container 116 can be controlled by changing a heat transfer area between the reaction container 116 and the container receiving portion 301 during depressurization of the reaction container 116. That is, the reaction container 116 is provided in the container receiving portion 301, the evaporative concentration processing is started, the reaction container 116 is floated to such an extent that heat can be transferred in the container receiving portion 301 at the start of depressurization of the inside of the reaction container 116, and after the inside of the reaction container 116 is sufficiently depressurized, the floating of the reaction container 116 is released, and a heat transfer area between the reaction container 116 and the container receiving portion 301 is increased, thereby promoting heating inside the reaction container 116.

An example of a driving mechanism for achieving this operation in the evaporative concentration mechanism 131 will be described.

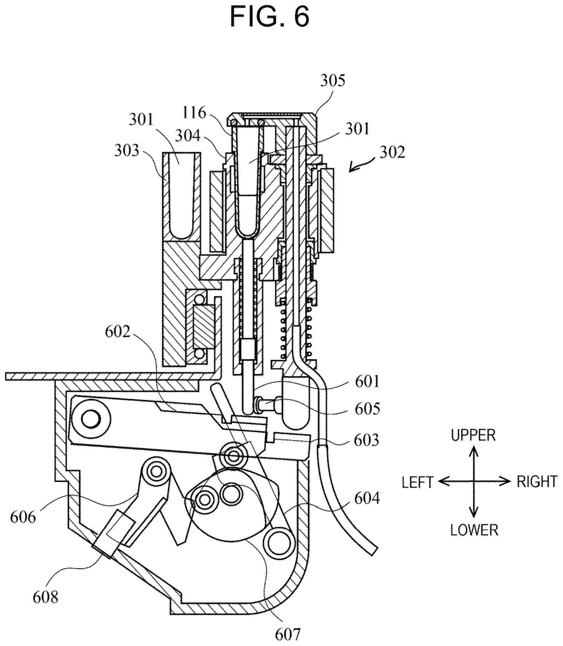

FIG. 6 is a schematic view showing a cross section of the evaporative concentration mechanism 131 through which centers of the reaction container 116 and the exhaust unit 305 pass, when viewed from a rear direction.

The evaporative concentration mechanism 131 includes the evaporative concentration unit 302, the exhaust unit 305, a reaction container floating member 601, a lever 602 (a first lever) that operates the reaction container floating member 601, a lever 603 (a second lever) that floats the exhaust unit 305, a lever 604 (a third lever) that pivots the exhaust unit 305, an exhaust unit pivoting pin 605, an original point detection lever 606 (a fourth lever), and a pivot cam 607 that determines an operation amount and a phase of each lever.

It is desirable that each lever is constantly in close contact with the pivot cam 607. For example, a torsion spring may be provided on a pivot shaft of each lever, and a torque in a direction of coming into close contact may be applied to each lever. As in the above-described mechanism, it is possible to save space by transmitting a force of one driving source to the cam and operating a plurality of components instead of attaching a driving source to each driving unit.

The reaction container floating member 601 is a reaction container moving member that moves the reaction container 116. Although a moving direction of the reaction container 116 is an up-down direction in the present embodiment, the moving direction may be changed to move the reaction container 116 in another direction.

Here, the reaction container floating member 601 passes through an up-down through hole provided in the heating unit 304, and is constantly pressed downward. That is, when the lever 602 is lowered, the reaction container 116 and the heating unit 304 are brought into close contact with each other, and a large heat quantity is input to the reaction container 116. In the present example, a push spring applies a downward force.

On the other hand, when the lever 602 is raised and the reaction container floating member 601 pushes up the reaction container 116, a gap occurs below the reaction container 116. At this time, a smaller heat quantity than the heat quantity in the close contact state is input into the reaction container 116. In this manner, since a quantity of heat transferred to the reaction container 116 is controlled by the mechanism, the control unit 104 only needs to maintain a temperature of the heating unit 304 constant, and does not need to have a function of changing the temperature.

In this manner, the reaction container floating member 601 moves the reaction container 116 to a predetermined separation position and a predetermined contact position along the container receiving portion 301 of the heating unit 304. At the separation position, the reaction container 116 and a bottom portion of the container receiving portion 301 are separated from each other, and at the contact position, the reaction container 116 and the bottom portion of the container receiving portion 301 are brought into contact with each other (in the present embodiment, in close contact with each other).

In the present embodiment, since the reaction container 116 moves up and down, and the separation position is vertically above the contact position.

When the exhaust unit 305 is not pivoted and a push-up height of the lever 603 is equal to or less than a certain value, a force in the up-down direction may be applied to the exhaust unit 305 so as to bring the reaction container 116 and the exhaust unit 305 into close contact with each other. This is to reduce leakage of a fluid from a contact portion. At this time, an opening of the reaction container 116 communicates with an opening of a vent pipe of the exhaust unit 305, and the inside of the reaction container 116 is brought into a depressurized state. In the present example, a downward force is applied by a push spring.

Next, a configuration of an exhaust unit pivot mechanism related to the lever 604 will be described.

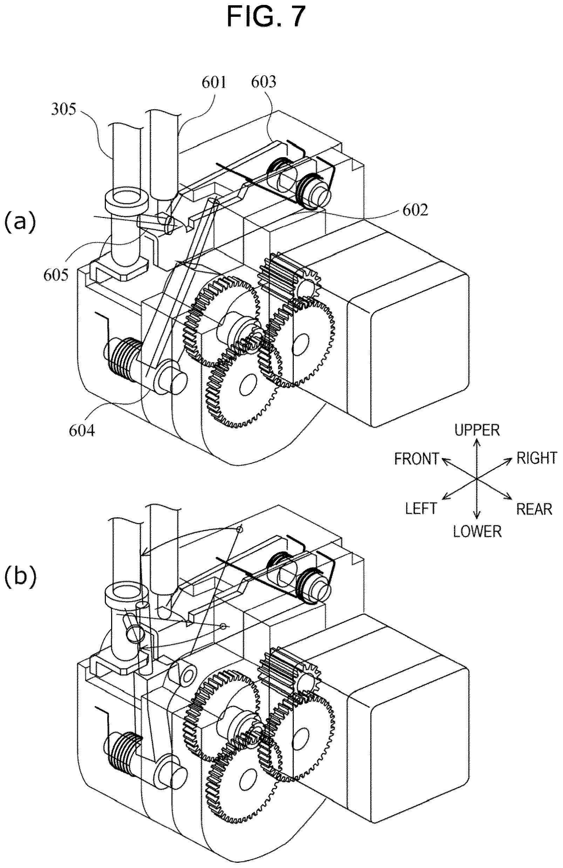

FIG. 7 is a view schematically showing a pivoting operation of the exhaust unit 305 in the evaporative concentration mechanism 131.

First, as shown in (a) of FIG. 7, a torque is constantly applied such that an opening of the exhaust unit 305 overlaps with an up-down projection region of the opening of the reaction container 116. The torque may be applied by a torsion spring.

From this state, as shown in (b) of FIG. 7, the lever 604 pushes the exhaust unit pivoting pin 605 to pivot the exhaust unit 305. When the exhaust unit 305 is pivoted, the opening of the reaction container 116 and the exhaust unit 305 are preferably not in contact with each other. This is to prevent the exhaust unit 305 from being caught by the reaction container 116 when the exhaust unit 305 is pivoted. Here, as an example, the opening of the exhaust unit 305 overlaps with the up-down projection region of the opening of the reaction container 116 when the exhaust unit 305 is not pivoted. The overlapping may be at any part of a pivoting range.

The original point detection lever 606 (FIG. 6) is constantly in close contact with the pivot cam 607, and passes through a detector 608 by being pushed by the pivot cam 607.

Next, an operation sequence of the evaporative concentration mechanism 131 controlled by the pivot cam 607 will be described.

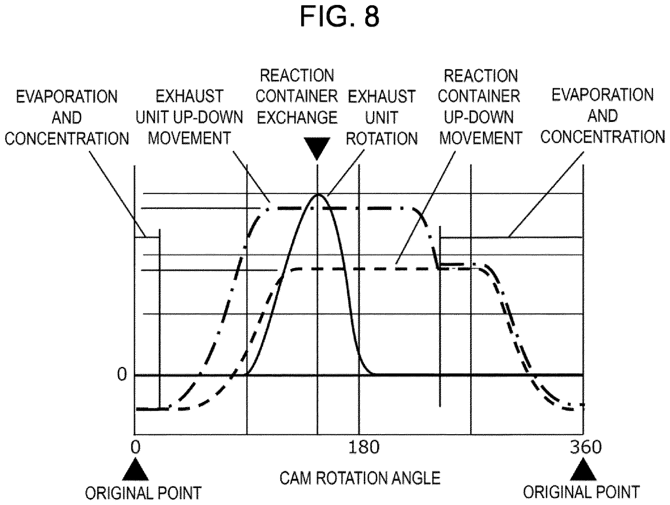

FIG. 8 is a graph showing an operation position of each unit of the automatic analyzer with respect to a rotation angle of the pivot cam 607. Here, a state where the original point detection lever 606 passes through the detector 608 is set as an original point.

At the start of an operation, the reaction container 116 in which the evaporative concentration processing is completed is placed in the container receiving portion 301 at the original point. At this time, the reaction container 116 and the exhaust unit 305 are lowered, and the inside of the reaction container 116 is sealed.

Subsequently, the exhaust unit 305 and the reaction container 116 are floated in this order. The reason for floating the reaction container 116 is to reduce a chance that the reaction container 116 cannot be removed when the reaction container 116 is transported out from the container receiving portion 301. When the reaction container 116 is completely exposed as viewing the mechanism in a front-rear direction or a left-right direction, it is not necessary to float the reaction container 116. A floating amount of the exhaust unit 305 is larger than that of the reaction container 116, and the exhaust unit 305 and the reaction container 116 are separated from each other at a maximum floating amount.

Subsequently, the exhaust unit 305 is pivoted such that the exhaust unit 305 does not overlap with the up-down projection region of the reaction container 116. That is, the exhaust unit driving mechanism 401 moves the exhaust unit 305 to a position not vertically above the reaction container 116. Accordingly, the reaction container 116 can be pulled out upward from the container receiving portion 301 and replaced.

Subsequently, the transport mechanism 132 is used to replace the reaction container 116 that was subjected to the evaporative concentration processing with the reaction container 116 that is not subjected to the evaporative concentration processing. In this manner, the automatic analyzer 100 replaces the reaction container 116 in the container receiving portion 301 in a state where the exhaust unit 305 is at the above-described replacement position. In this manner, the reaction container 116 during replacement does not come into contact with the exhaust unit 305.

As shown in FIGS. 3 and 4, a plurality of exhaust units 305 are provided in the present embodiment. The automatic analyzer 100 can be configured such that while one exhaust unit 305 is at the replacement position, another exhaust unit 305 depressurizes the inside of the reaction container 116 corresponding to the other exhaust unit 305. In this manner, the plurality of reaction containers 116 can be efficiently processed in parallel.

Subsequently, the exhaust unit 305 is pivoted such that a vent hole opening of the exhaust unit 305 overlaps with the up-down projection region of the opening of the reaction container 116.

Subsequently, only the exhaust unit 305 is lowered in a state where the reaction container 116 is floated, and the exhaust unit 305 depressurizes the inside of the reaction container 116 in a state where the reaction container 116 is in close contact with a lid (formed with the vent hole opening) of the exhaust unit 305.

After a predetermined time, the reaction container 116 is lowered while maintaining a state where the reaction container 116 and the exhaust unit 305 are in close contact. At this time, since a heat transfer area to the reaction container 116 is larger than that at the time of floating, gas in the reaction container 116 is aspirated in a state where a large heat quantity is input to a sample. Here, a return to the original point occurs.

Here, in order to further reduce bumping in the above-described operation, a method of maximizing a difference in a heat transfer area to a sample between a small heat quantity time and a large heat quantity time will be described.

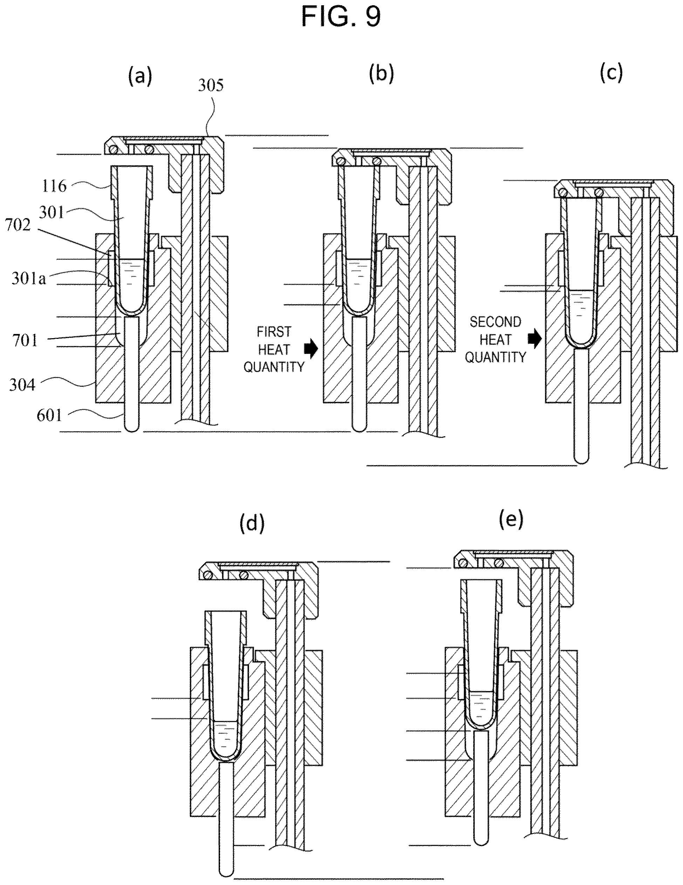

FIG. 9 is a view schematically showing a positional relationship between the reaction container 116 and the exhaust unit 305 when the pivot cam 607 is operated. The container receiving portion 301 of the heating unit 304 has a step portion 301a whose diameter decreases from an opening end toward a bottom portion.

First, as shown in (a) of FIG. 9, the reaction container 116 is floated and disposed at the separation position separated from a bottom portion of the container receiving portion 301. At the separation position, a gap 701 occurs between a bottom portion of the reaction container 116 and the container receiving portion 301, and a heat transfer area is reduced.

Here, a gap 702 is provided between a side surface of the reaction container 116 and the container receiving portion 301 by the step portion 301a from an upper surface opening of the container receiving portion 301 to a predetermined depth. Accordingly, the heat transfer area to a sample can be further reduced.

In particular, it is desirable to make a lower end of the gap 702 lower than a height of a liquid surface when the reaction container 116 is floated, and to reduce the heat transfer area to a sample. That is, it is desirable that a liquid surface of a sample is at a position higher than the step portion 301a in a state where the reaction container 116 is at the separation position.

Next, as shown in (b) of FIG. 9, the exhaust unit 305 is lowered to depressurize the inside of the reaction container 116. That is, in a state where the reaction container 116 is at the separation position, the exhaust unit 305 aspirates vapor in the reaction container 116, and the heating unit 304 heats the reaction container at a predetermined heat quantity (a first heat quantity) (a first evaporative concentration step).

In the first evaporative concentration step, since heat transfer via the gap 702 is prevented, a heat quantity transferred to the reaction container 116 is small without adjusting an output of the heating unit 304. Therefore, a chance that a temperature rapidly rises during depressurization (during a drop in a boiling point of a solution) is reduced, and bumping of a sample is reduced.

Next, as shown in (c) of FIG. 9, the reaction container 116 and the exhaust unit 305 are further lowered and disposed at a contact position where the reaction container 116 comes into contact with the bottom portion of the container receiving portion 301. In a state where the reaction container 116 is at the contact position, the exhaust unit 305 aspirates vapor in the reaction container 116, and the heating unit 304 heats the reaction container 116 with a predetermined heat quantity (a second heat quantity) (a second evaporative concentration step).

Here, in the second evaporative concentration step, since an area in which the reaction container 116 and the heating unit 304 are in direct contact with each other is large, the second heat quantity transferred to the reaction container 116 is larger than the first heat quantity without adjusting an output of the heating unit 304. Therefore, heating can be efficiently performed.

In this state, the lower end of the gap 702 may be higher than a height of a liquid surface and the heat transfer area to a sample may be maximized. That is, in a state where the reaction container 116 is at the contact position, a liquid surface of a sample may be at a position lower than the step portion 301a.

Here, the automatic analyzer 100 can perform the second evaporative concentration step after performing the first evaporative concentration step for a predetermined time. In this manner, bumping of a sample is more reliably reduced.

Further, (d) and (e) of FIG. 9 show an example in which an amount of a sample is smaller than that in (a) to (c) of FIG. 9. (d) of FIG. 9 shows a contact position where the reaction container 116 is lowered, and (d) of FIG. 9 shows a separation position where the reaction container 116 is floated.

Next, a position of each component with respect to a rotation angle of the pivot cam 607 will be described using a schematic diagram.

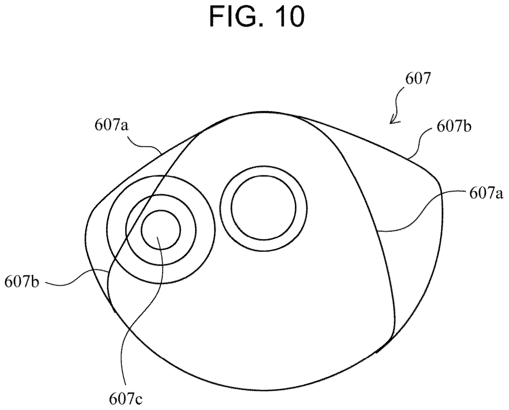

FIG. 10 shows a configuration example of the pivot cam 607 shown in FIG. 6. The pivot cam 607 has a triple cam structure, and a cam member 607a (a first cam member) determines a position of the lever 603, a cam member 607b (a second cam member) determines a position of the lever 602, and a cam member 607c (a third cam member) determines a position of the lever 604. The cam members 607a, 607b, and 607c are integrally fixed to the pivot cam 607 and are operated in conjunction with one another.

The cam member 607a changes the position of the lever 603 to move the reaction container 116 up and down. The cam member 607b changes the position of the lever 602 to move the exhaust unit 305 up and down, for example, to the open position and the closed position. The cam member 607c changes the position of the lever 604 to pivot the exhaust unit 305, for example, to move the exhaust unit 305 to the open position and the replacement position.

A large number of components can cooperate with one another with a single mechanism by using such a pivot cam 607.

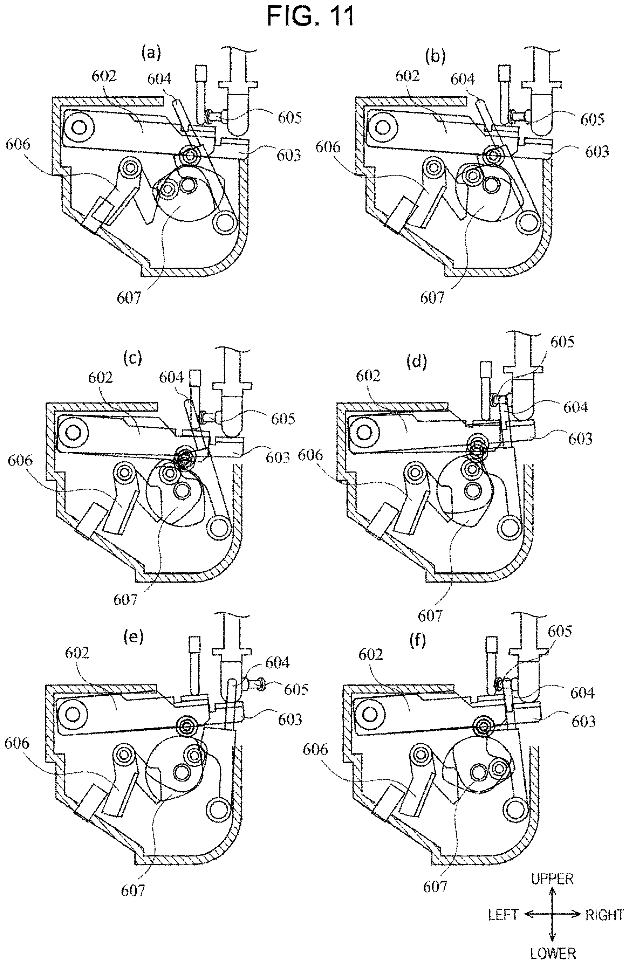

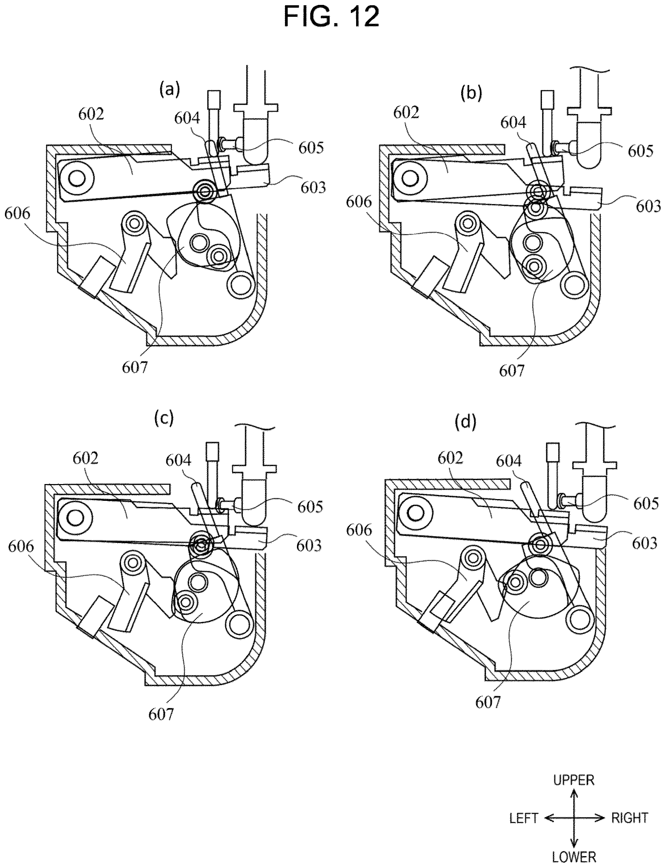

FIGS. 11 and 12 are views schematically showing examples of a positional relationship among components inside the exhaust unit driving mechanism 401 when the pivot cam 607 is operated.

First, at an origin point shown in (a) of FIG. 11, the pivot cam 607 pushes only the original point detection lever 606, and the levers 602 to 604 are released from pushing.

When the pivot cam 607 is pivoted from the original point, pushing of the original point detection lever 606 is released as shown in (b) of FIG. 11. The pivot cam 607 is pivoted clockwise in the present example. Alternatively, the pivot cam 607 may be reversely pivoted.

Subsequently, as shown in (c), (d), and (e) of FIG. 11, the pivot cam 607 pushes the lever 604, the lever 603, and the lever 602.

Subsequently, as shown in (f) of FIG. 11, and (a), (b), (c) of FIG. 12, pushing of the lever 602, the lever 603, and the lever 604 by the pivot cam 607 is released.

Finally, as shown in (d) of FIG. 12, the pivot cam 607 pushes the original point detection lever 606, and the pivot cam 607 returns to the original point. A state shown in (d) of FIG. 12 is the same as a state shown in (a) of FIG. 11.

The operation shown in FIGS. 11 and 12 described above is an example of a specific operation of the automatic analyzer 100, and an operation according to the graph shown in FIG. 8 can also be performed. In this case, the pivot cam 607 is pivoted as shown in FIGS. 11 and 12. Hereinafter, details will be described.

First, the automatic analyzer 100 disposes the exhaust unit 305 at the replacement position. Next, the automatic analyzer 100 inserts the reaction container 116 into the container receiving portion 301 of the heating unit 304. Next, the automatic analyzer 100 moves the exhaust unit 305 from the replacement position to the open position by an action of the cam member 607c. Next, the automatic analyzer 100 moves the exhaust unit 305 from the open position to the closed position by an action of the cam member 607b.

In this state, the automatic analyzer 100 executes the first evaporative concentration step and the second evaporative concentration step described above.

Next, the automatic analyzer 100 moves the exhaust unit 305 from the closed position to the open position by an action of the cam member 607b. Next, the automatic analyzer 100 moves the exhaust unit 305 from the open position to the replacement position by an action of the cam member 607c. Next, the automatic analyzer 100 takes out the reaction container 116 from the container receiving portion 301 of the heating unit 304 (or when the subsequent reaction container 116 is present, the reaction container 116 is replaced with the subsequent reaction container 116).

According to such an operation, a large number of operations of the automatic analyzer 100 can be appropriately controlled by the single pivot cam 607.

Next, a motor mechanism that operates the pivot cam 607 will be described.

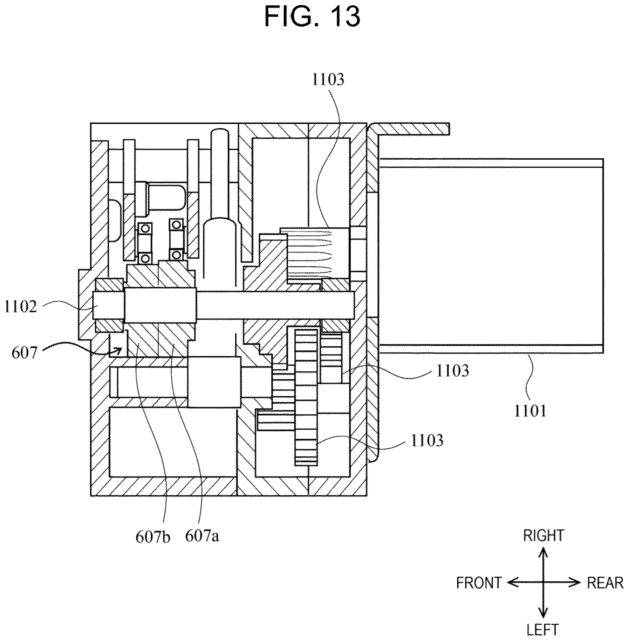

FIG. 13 shows a cross section of the evaporative concentration mechanism 131 as viewed from above along a horizontal plane passing through a central axis of the pivot cam 607.

The automatic analyzer 100 includes a motor mechanism. The motor mechanism includes a motor 1101 and the above-described pivot cam 607. The pivot cam 607 is driven by the motor 1101.

A driving force of the motor 1101 is transmitted to the pivot cam 607 via an output shaft 1102. The motor mechanism may include a speed reduction gear that transmits power between the motor 1101 and the pivot cam 607. For example, a speed reduction gear 1103 may be interposed between the motor 1101 and the output shaft 1102. In this manner, when a speed required for moving up and down the reaction container 116 and moving up and down and pivoting the exhaust unit 305 is low, an output torque required for the motor 1101 can be reduced.

The exhaust unit driving mechanism 401 may be more hermetically sealed in a box to reduce contamination of foreign matters from the outside of the box. Further, the speed reduction gear 1103 may be sealed or substantially sealed in a box different from the box of the exhaust unit driving mechanism 401.

As described above with reference to FIG. 3, the heating unit 304 can be made movable. In this case, when a vertical projection region of a moving range of the heating unit 304 and a vertical projection region of the motor mechanism are disposed at least partially overlapping with each other, an installation area of the automatic analyzer 100 can be reduced. The "moving range of the heating unit 304" refers to, for example, a space occupied when the heating unit 304 moves. Further, when the motor mechanism is disposed below the heating unit 304, a space above the motor mechanism can be efficiently used.

The number of container receiving portions 301 shown in FIG. 3 is an example, and can be changed in consideration of the number of samples that can be processed per hour set in the automatic analyzer, that is, throughput, a time required for evaporative concentration, and the like. In a case where the throughput is set to 100 samples/hour (36 seconds/sample) and the time required for evaporative concentration is set to 108 seconds (36 seconds × 3), when three container receiving portions 301 are provided in each of the evaporative concentration unit 302 and the standby unit 303, the evaporative concentration mechanism 131 can sequentially process the reaction containers 116 without idle time even when the same processing is continuously performed, and the throughput of 100 samples/hour can be obtained. In this case, it is necessary to provide the exhaust unit 305 for each of the three container receiving portions 301 in the evaporative concentration unit 302.

When the reaction container 116 and the exhaust unit 305 are brought into close contact with each other to perform exhaust, the valve 501 is opened during aspiration of vapor, and the valve 501 is closed after the aspiration is completed, thereby preventing the reaction container 116 from being separated from the exhaust unit 305.

It is considered that condensed vapor drops from the exhaust unit 305 after aspiration of vapor by the exhaust unit 305 is completed. As a countermeasure for this problem, the exhaust unit 305 may be heated. In addition, as a countermeasure, empty aspiration by the exhaust unit 305 may be performed after the exhaust is completed and the exhaust unit 305 is separated from the reaction container 116.

As described above, according to Embodiment 1 of the invention, the heat transfer area to the container receiving portion 301 is changed while the reaction container 116 is depressurized.

Accordingly, it is possible to reduce bumping of a sample by applying high heat after sufficiently depressurizing a container, and it is possible to achieve an automatic analyzer in which an evaporative concentration rate of a sample is increased.

Although the standby unit 303 and the evaporative concentration unit 302 are adjacent to each other in the example shown in FIG. 3, the standby unit 303 may be formed of a heat insulation material and an influence of heat from the evaporative concentration unit 302 on the standby unit 303 can be restricted. In addition, the standby unit 303 and the evaporative concentration unit 302 may be disposed apart from each other so as not to be thermally affected.

The invention is not limited to the embodiment and the modifications described above, and includes various other modifications. For example, the embodiment has been described in detail to facilitate understanding of the invention, and the invention is not necessarily limited to those including all the configurations described above.

Although heat processing and exhaust processing are performed in concentration processing in the above-described example, an example in which either heating processing or exhaust processing is performed in concentration processing can also be made an embodiment of the invention. This is because concentration processing of a sample can be performed by heat processing only or by exhaust processing only.

Some or all of configurations, functions, and the like described above may be implemented by, for example, designing with an integrated circuit. In addition, the above configurations, functions, and the like may be implemented by software by a processor interpreting and executing a program for implementing each function.

The analysis unit 103 may be, for example, an optical analysis unit other than a mass spectrometer.

### Reference Signs List

100 automatic analyzer
116 reaction container
301 container receiving portion (insertion hole)
301a step portion
304 heating unit (heating member)
305 exhaust unit
307 motor
401 exhaust unit driving mechanism
601 reaction container floating member (reaction container moving member)
602 to 604 lever
605 exhaust unit pivoting pin
606 original point detection lever
607 pivot cam
607a cam member (first cam member)
607b cam member (second cam member)
607c cam member (third cam member)
1101 motor
1103 speed reduction gear

All publications, patents, and patent applications cited in the present specification are incorporated into the present specification by citation.

## Claims

1. An automatic analyzer comprising:
a reaction container configured to accommodate a liquid sample, the reaction container having an opening;
a heating member configured to heat the reaction container, the heating member having one or more bottomed insertion holes, the reaction container being insertable into the insertion hole;
an exhaust unit configured to aspirate vapor in the reaction container, the exhaust unit being openable and closable with respect to the opening of the reaction container, the exhaust unit being configured to seal the opening of the reaction container in a closed state; and
a reaction container moving member configured to move the reaction container, the reaction container being moved between a separation position and a contact position by the reaction container moving member along the insertion hole of the heating member, the reaction container and a bottom portion of the insertion hole being separated from each other at the separation position, the reaction container and the bottom portion of the insertion hole being in contact with each other at the contact position, wherein
the automatic analyzer executes
a first evaporative concentration step in which the exhaust unit aspirates the vapor in the reaction container and the heating member heats the reaction container with a first heat quantity in a state where the reaction container is at the separation position, and
a second evaporative concentration step in which the exhaust unit aspirates the vapor in the reaction container and the heating member heats the reaction container with a second heat quantity larger than the first heat quantity in a state where the reaction container is at the contact position.

2. The automatic analyzer according to claim 1, wherein
the automatic analyzer performs the second evaporative concentration step after performing the first evaporative concentration step for a predetermined time.

3. The automatic analyzer according to claim 1, wherein
the separation position is vertically above the contact position.

4. The automatic analyzer according to claim 3, wherein
the insertion hole of the heating member has a step portion whose diameter decreases from an opening end toward the bottom portion,
a liquid level of the liquid sample is at a position higher than the step portion in the state where the reaction container is at the separation position, and
a liquid level of the liquid sample is at a position lower than the step portion in the state where the reaction container is at the contact position.

5. The automatic analyzer according to claim 1, wherein
the heating member includes a plurality of the insertion holes, and the insertion holes are arranged in a line, and
the heating member is configured to be movable in parallel with an arrangement direction of the insertion holes.

6. The automatic analyzer according to claim 1, further comprising:
an exhaust unit driving mechanism configured to move the exhaust unit between an open position and a closed position, wherein
the exhaust unit opens the opening by being separated from the opening of the reaction container at the open position, and depressurizes an inside of the reaction container by sealing the opening of the reaction container at the closed position.

7. The automatic analyzer according to claim 6, wherein
the open position and the closed position are vertically above the reaction container,
the exhaust unit driving mechanism moves the exhaust unit to a replacement position that is not vertically above the reaction container, and
in the automatic analyzer, the reaction container in the insertion hole is replaced in a state where the exhaust unit is at the replacement position.

8. The automatic analyzer according to claim 7, wherein
the automatic analyzer includes a plurality of the exhaust units, and the exhaust units are arranged corresponding to the insertion holes.

9. The automatic analyzer according to claim 8, wherein
while one of the exhaust units is at the replacement position, another exhaust unit depressurizes inside of a corresponding reaction container.

10. The automatic analyzer according to claim 7, further comprising:
a motor mechanism, wherein
the motor mechanism includes a motor and a pivot cam driven by the motor,
the pivot cam includes a first cam member, a second cam member, and a third cam member that are operated in conjunction with one another,
the first cam member moves the reaction container,
the second cam member moves the exhaust unit between the open position and the closed position, and
the third cam member moves the exhaust unit between the open position and the replacement position.

11. The automatic analyzer according to claim 10, wherein
the motor mechanism includes a speed reduction gear configure to transmit power between the motor and the pivot cam.

12. The automatic analyzer according to claim 10, wherein
the heating member is configured to be movable,
an up-down projection region of a movable range of the heating member and an up-down projection region of the motor mechanism at least partially overlap with each other, and
the motor mechanism is disposed below the heating member.

13. The automatic analyzer according to claim 10, wherein
the automatic analyzer executes following steps in order:
a step of inserting the reaction container into the insertion hole of the heating member;
a step of moving the exhaust unit from the replacement position to the open position by an action of the third cam member;
a step of moving the exhaust unit from the open position to the closed position by an action of the second cam member;
the first evaporative concentration step and the second evaporative concentration step;
a step of moving the exhaust unit from the closed position to the open position by an action of the second cam member;
a step of moving the exhaust unit from the open position to the replacement position by an action of the third cam member; and
a step of taking out the reaction container from the insertion hole of the heating member.
